# EUROPEAN PATENT SPECIFICATION

(11) **EP 0 883 291 B1**
(45) Date of publication and mention of the grant of the patent: **05.02.2003**
(21) Application number: 97308244.9
(22) Date of filing: 17.10.1997
(51) Int. Cl.: H04N 5/12, H04N 7/24

(54) **Frame synchronizing device and method therefor**
Vorrichtung und Verfahren zur Rastersynchronisierung
Dispositif et procédé de synchronisation de trame

(30) Priority: 03.06.1997 KR 9722954
(43) Date of publication of application: 09.12.1998
(73) Proprietor: Samsung Electronics Co., Ltd., Suwon City, Kyungki-do (KR)
(72) Inventor: Seong, Goan-soo, Seocho-gu, Seoul (KR); Choi, Sung-kyu, Seoul (KR)
(74) Representative: Chugg, David John

(56) References cited:
- EP-A- 0 721 288
- WO-A-95/27977
- WO-A-96/01540
- US-A- 5 566 174
- KUNZMAN A J ET AL: "1394 HIGH PERFORMANCE SERIAL BUS: THE DIGITAL INTERFACE FOR ATV" , IEEE TRANSACTIONS ON CONSUMER ELECTRONICS, VOL. 41, NR. 3, PAGE(S) 893 - 900 XP000539552 ISSN: 0098-3063 * the whole document *
- PATENT ABSTRACTS OF JAPAN vol. 096, no. 004, 30 April 1996 (1996-04-30) & JP 07 327032 A (MATSUSHITA ELECTRIC IND CO LTD), 12 December 1995 (1995-12-12)

## Description

The present invention relates to a frame synchronizing device and a method therefor, for synchronizing systems having a digital interface, in an audio/video (A/V) apparatus.

As almost all A/V apparatus becomes digitized, an apparatus can be controlled by another apparatus using a digital interface. When moving picture data is received, the picture cannot be correctly restored unless the apparatuses having the digital interface are synchronized. A device to achieve this state is referred to as a frame synchronizing device. A suitable and well known digital interface for such purposes is the IEEE 1394 serial bus, which is described, in the IEEE Transactions on Consumer Electronics volume 41, number 3, pages 893 to 900. An example of a method for synchronizing digitised A/V apparatus over the IEEE 1394 bus is given in European Patent EP 0 721 288. The system described in that patent employs a phase locked loop for generating timing signals used in frame synchronization.

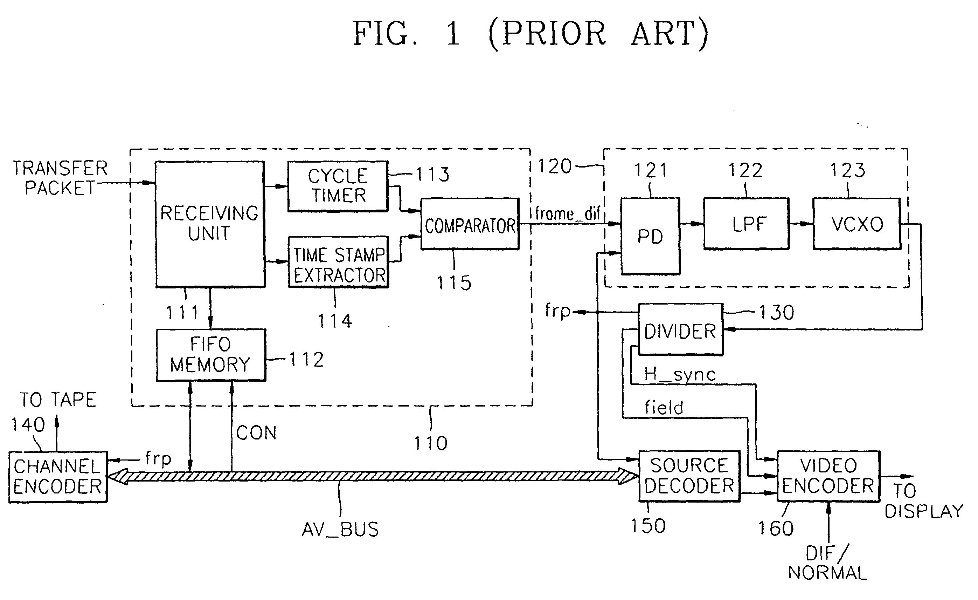

Figure 1 is a block diagram of a conventional frame synchronizing device. A digital interface (DIF) 110 synchronizes a digital recording and reproducing apparatus (here, a slave system) with external equipment (here, a master system) which is for transferring the transport packet. It does this via a cycle timer 113, a time stamp extractor 114 and a comparator 115 by extracting a time stamp from a transport packet received during a digital interface mode, operating a PLL circuit 120 according to a frame pulse (frame_dif) extracted from frame starting time information in the time stamp, dividing a clock signal generated in the PLL circuit 120 by using a divider 130, applying a frame reset pulse (frp) synchronized with the divided clock signal to a channel encoder 140 and a source decoder 150, and applying a horizontal synchronizing signal (H_sync) synchronized with the divided clock signal and a field signal (field) to a video encoder 160. Here, the digital recording and reproducing apparatus, which has an inner bus margin, represents digital video cassette recorder and all digital video camera (DVC) systems such as a digital camcorder. The digital recording and reproducing apparatus includes a recording system, constructed of a source encoder (not shown) and a channel encoder 140, and includes a reproducing system, constructed of a channel decoder (not shown), a source decoder 150 and a video encoder 160. The PD, of the PLL circuit 120 shown in Figure 1, denotes a phase discriminator. LPF denotes a low pass filter. VCXO denotes a voltage controlled crystal oscillator.

When a synchronizing signal, required for a system, for example, the channel encoder 140, the source decoder 150, and the video encoder 160, is generated in the divider 130, then data is read from a FIFO memory 112 and transferred to the channel encoder 140 and the source decoder 150 through an AV_bus. The data is read according to a control signal (CON), generated during fixed timing on the basis of the frame reset pulse (frp) which is generated in the divider 130. At this time, a colour burst signal is generated by being frame-locked inside the video encoder 160 for receiving as input the horizontal synchronizing signal (H_sync) and the field signal (field). The system maintains a four field sequence or an eight field sequence. To receive colour and mono broadcasts in an NTSC broadcasting system, picture quality of the colour burst signal is deteriorated unless the four field sequence is maintained, as the phase is identical every four fields since a phase difference of 180° exists between lines. In the colour burst signal of a PAL broadcasting system, an eight field sequence should be maintained, because the phase is identical every eight fields since a phase difference of 270° exists between lines.

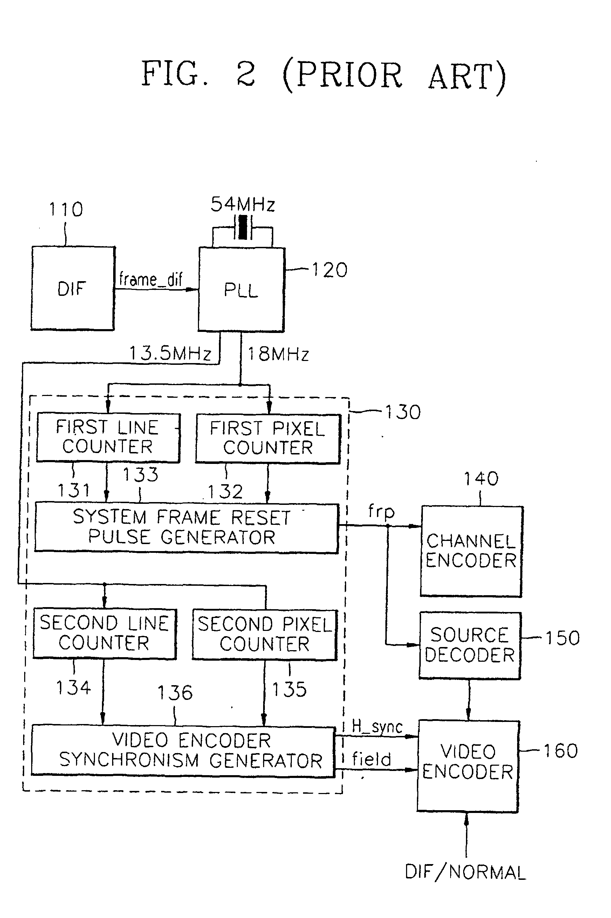

Figure 2 is a detailed block diagram of the divider 130 shown in Figure 1. The divider 130 includes a first line counter 131 for receiving a frequency signal of 18MHz from the PLL circuit 120 and counting lines, a first pixel counter 132 for counting pixels, a system frame reset pulse generator 133 for receiving the outputs of the first line counter and the first pixel counter and generating the frame reset pulse (frp), a second line counter 134 for receiving a frequency signal of 13.5MHz from the PLL circuit 120 and counting lines, a second pixel counter 135 for counting pixels, and a video encoder synchronism generator 136 for receiving the outputs of the second line counter and the second pixel counter and generating a horizontal synchronizing signal (H-sync) and a field signal (field). During a digital interface mode, the PLL circuit 120 locks a clock signal oscillating at 54MHz to a frame pulse (frame_dif) of 15Hz generated in the digital interface 110, and provides the clock signal to the divider 130 as system clock. The divider 130 divides the system clock and generates a synchronizing signal required for the channel encoder 140, the source decoder 150, and the video encoder 160. Here, when a synchronizing signal synchronized with the frame pulse of a master system is generated from a slave system during the digital interface mode, the data stored in the digital interface 110 which is transferred from the master system, is read and transferred to the slave system.

However, the performance of the above-mentioned frame synchronizing device is deteriorated, because the clock signal generated in the PLL circuit 120 cannot be used unless an extremely precise voltage controlled oscillator is designed. This is because a 54MHz clock is locked using the frame pulse (frame_dif) input with a frequency of only 15Hz. Therefore, in a conventional frame synchronizing device, high-priced parts such as a voltage controlled crystal oscillator must be used, since the PLL is locked by a frame frequency of a low frequency.

The patent document WO-A-96 01540 describes a signal processing system comprising a source apparatus coupled to destination apparatus, in which video, synchronization and other data are passed over a bus according to a time-slot allocation protocol. The destination apparatus is arranged to synchronize the time-value of a clock in accordance with the synchronization data and present the video data at an output. This system deals with uncertainty in when a particular apparatus will be allocated a time-slot on the bus when a plurality of apparatuses are connected to the bus in such a way that no bus-dependent intervention in the signal generated by the source apparatus is needed.

The Patent Abstract of Japan relating to JP-A-07327032 teaches a transmitter and receiver adapted to take frame synchronization with sender side and receiver side equipments even when a clock signal asynchronously with video and data to be sent is used to send the data by sending multiplexedly time information at the head of a frame in the transmission mode and allowing the receiver side to decode the frame based on the time information. This is achieved by the receiver adding a prescribed value to received time information and comparing the information with its own time information to reproduce accurately a frame period and a frame phase at the sender side and the receiver side generating a required synchronizing signal based upon it.

It is an aim of preferred embodiments of the present invention to provide a frame synchronizing device for synchronizing systems, by generating a frame reset signal on the basis of frame time information of external equipment output through a digital interface, and resetting the entire system according to the frame reset signal.

It is another aim of embodiments of the present invention to provide a frame synchronizing device for synchronizing systems, by free-oscillating a colour signal during a digital interface mode in order to accommodate to a frame reset signal having a variable period, when a system is reset by the frame reset signal generated on the basis of external frame time information, in a recording and reproducing apparatus having a digital interface.

It is still another aim of embodiments of the present invention to provide a frame synchronizing method for synchronizing systems, by generating a frame reset signal on the basis of frame time information of external equipment output through a digital interface, and resetting the entire system by the frame reset signal.

It is still further another aim of embodiments of the present invention to provide a frame synchronizing method for synchronizing systems, by free-oscillating a colour signal during a digital interface mode in order to accommodate to a frame reset signal having a variable period, when a system is reset by the frame reset signal generated on the basis of external frame time information.

According to an aspect of the invention, there is provided a frame synchronizing device for synchronizing systems connected to a digital interface, comprising a digital interface, for extracting frame time information included in a received signal from an external source; a first edge detector reset by the frame time information output from the digital interface, for detecting the edge of the frame time information according to a first system clock signal, and for outputting a first reset signal; a second edge detector reset by the frame time information output from digital interface, for detecting the edge of the frame time information according to a second system clock signal, and for outputting a second reset signal; and a generator for generating a frame reset signal based on the first system clock signal and the first reset signal and for generating synchronizing signals required by the systems, based on the second system clock signals and the second reset signal. The frame synchronizing device according to the present invention preferably further comprises a signal processor, for free-oscillating a colour burst signal during a digital interface mode, when the received signal is source-decoded and then encoded into a display signal, and for resetting the colour burst signal according to the synchronizing signals during a normal mode.

Preferably, said digital interface is IEEE 1394.

Said digital interface preferably comprises: a receiving unit for receiving said received signal from the external source in the form of a transport packet, removing an extra header of said transport packet and outputting data having no extra header; a buffer for temporarily storing said data having no extra header; a time stamp extractor for extracting a time stamp included in said transport packet; a cycle timer for counting according to a reference clock included in said transport packet, outputting a count value, and renewing said count value in every cycle start packet; and a comparator for comparing said frame time information included in said time stamp with said count value, and generating a frame pulse.

Said generator preferably generates said frame reset signal delayed by a predetermined time compared to said frame pulse, considering the inner bus margin of said digital interface and time for writing data into said buffer.

A clock generator may be provided for generating first and second system clock signals required for said systems.

Said generator preferably comprises: a first line counter and a first pixel counter, reset by said first reset signal, for counting lines and pixels, respectively, according to said first system clock signal; a first generator for generating the frame reset signal according to the outputs of said first line counter and said first pixel counter; a second line counter and a second pixel counter, reset by said second reset signal, for counting lines and pixels, respectively, according to said second system clock signal; and a second generator for generating a horizontal synchronizing signal and a field signal according to the outputs of said second line counter and said second pixel counter.

The device may further comprise: a channel encoder, reset by said frame reset signal generated by said first generator, for channel-encoding data read from said buffer and transferring the read data to a recording medium; a source decoder reset by said frame reset signal, for source-decoding data read from said buffer; and a video encoder, reset by said horizontal synchronizing signal and said field signal output from said second generator, for encoding data output from said source decoder into a display signal.

Preferably, the colour burst signal is free-oscillated during a digital interface mode, and the colour burst signal is reset at a period of a predetermined number of fields according to said horizontal synchronizing signal and said field signal output from said second generator during a normal mode.

Preferably, the data stored in said buffer is transferred to said source decoder and said channel encoder, after said system is reset by said frame reset signal, during said digital interface mode.

According to a second aspect of the invention, there is provided a frame synchronizing device for synchronizing a master system with a slave system, comprising: an extractor for extracting reference time information from data received from said master system; a first edge detector reset by said frame time information output from said digital interface, for detecting the edge of said frame time information according to a first system clock signal, and for outputting a first reset signal; a second edge detector reset by said frame time information output from said digital interface, for detecting the edge of said frame time information according to a second system clock signal, and for outputting a second reset signal; and a generator for generating a frame reset signal based on said first system clock signal and said first reset signal and for generating synchronizing signals required by said slave system, based on said second system clock signals and said second reset signal.

According to a third aspect of the invention, a frame synchronizing method is provided for synchronizing systems connected to a digital interface comprising the steps of extracting frame time information included in a signal received from an external source, during a digital interface mode; detecting the edge of said frame time information according to a first system clock signal, and outputting a first reset signal; detecting the edge of said frame time information according to a second system clock signal, and outputting a second reset signal; and generating a frame reset signal based on said first system clock signal and said first reset signal and generating synchronizing signals required by said systems, based on said second system clock signals and said second reset signal, wherein the extracting step further comprises the sub-step of receiving data in the form of a transport packet from the external source, removing an extra header from the transport packet and outputting data having no extra header.

Said extracting step further comprises the steps of: (a2) storing said data having no extra header; (a3) extracting a time stamp included in said transport packet; (a4) performing counting according to a reference clock included in said transport packet, outputting a count value, and renewing said count value at every cycle start packet; and (a5) comparing said frame time information included in said time stamp with said count value and generating a frame pulse.

Said frame reset signal is preferably generated after delaying said frame pulse by predetermined time said frame pulse considering the inner bus margin of said digital interface.

Said generating step preferably comprises the sub-steps of: (d1) counting lines and pixels according to said first system clock, resetting according to said first reset signal, and outputting first count values; (d2) generating a frame reset signal on the basis of said first count values; (d3) counting lines and pixels according to said second system clock, resetting according to said second reset signal, and outputting second count values; and (d4) generating a horizontal synchronizing signal and a field signal on the basis of said second count values.

The method may further comprise the steps of: (e) channel-encoding the data stored in said step (a2), transferring it to a recording medium, and resetting according to said frame reset signal; (f) source-decoding data stored in said step (a2), and outputting the source-decoded data, and resetting according to said frame reset signal; and (g) encoding said source-decoded data into a display signal and resetting said source-decoded data by said horizontal synchronizing signal and said field signal.

Also, the frame synchronizing method according to the present invention preferably further comprises the steps of free-oscillating a colour burst signal during a digital interface mode, and resetting the colour burst signal at a period of a predetermined number of fields according to the horizontal synchronizing signal and the field signal during a normal mode.

The method may further comprise a step of transferring the data stored in said step (a2) to said steps (e) and (f) after said system is reset by said frame reset signal.

According to a further aspect of the invention, there is provided a frame synchronizing method for synchronizing a master system with a slave system, comprising the steps of: (a) extracting reference time information from data received from said master system; (b) detecting the edge of said frame time information according to a first system clock signal, and outputting a first reset signal; (c) detecting the edge of said frame tine information according to a second system clock signal, and outputting a second reset signal; and(d) generating a frame reset signal based on said first system clock signal and said first reset signal and generating synchronizing signals required by said slave system, based on said second system clock signals and said second reset signal, wherein said step (a) further comprises the step of (a1) receiving data in the form of a transport packet from an external source, removing an extra header from the transport packet, and outputting data having no extra header.

For a better understanding of the invention, and to show how embodiments of the same may be carried into effect, reference will now be made, by way of example, to the accompanying diagrammatic drawings, in which:
Figure 1 is a block diagram of a conventional frame synchronizing device;
Figure 2 is a detailed block diagram of a divider shown in Figure 1;
Figure 3 is a block diagram of a frame synchronizing device according to an embodiment of the present invention;
Figure 4 is a detailed block diagram of a divider shown in Figure 3;
Figure 5 is a timing diagram of input and output signals of the divider shown in Figure 4; and
Figure 6 is a detailed circuit diagram of a colour signal processor of a video encoder shown in Figure 3.

Hereinafter, a frame synchronizing device and a method therefor, according to the present invention, will be described with reference to the attached drawings.

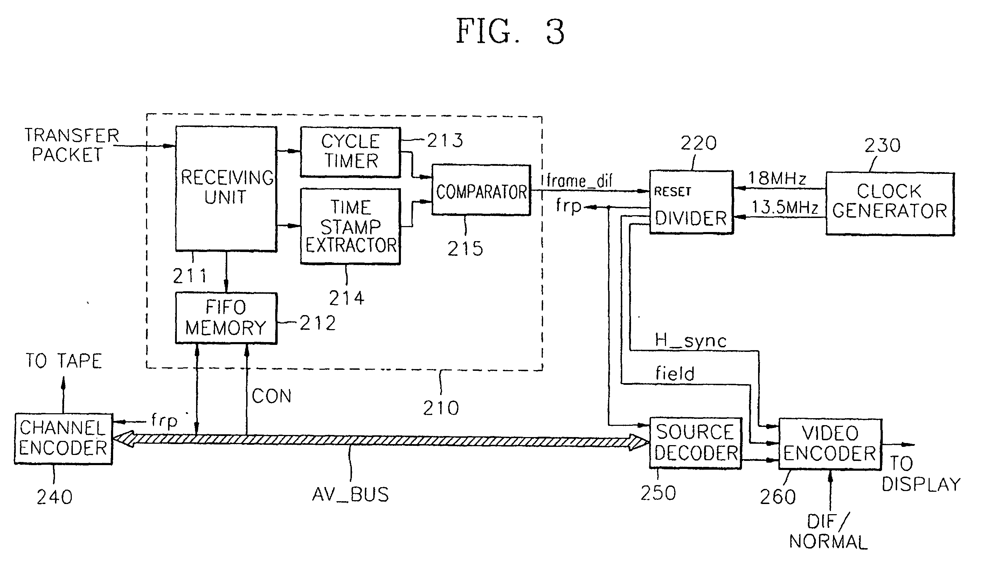

In Figure 3, a receiving unit 211, of a digital interface 210, receives data transferred from external equipment in the form of a transport packet, removes an extra header of the transport packet, and writes data without the extra header in a first-in first-out (FIFO) memory 212. A time stamp extractor 214 extracts a time stamp from the transport packet output through the receiving unit 211. The time stamp includes frame starting time information. A cycle timer 213 performs counting according to a reference clock included in the transport packet, outputs a count value, and renews the counted value in every cycle start packet. A comparator 215 compares the count value of the cycle timer 213 with the frame time information of the time stamp extracted from the time stamp extractor 214 and generates a frame pulse (frame_dif).

Here, the digital interface 110 can be IEEE 1394, which is a high speed data transfer standard defined by the IEEE and is used as an interface for connecting digital A/V apparatuses. If the digital interface 110 is IEEE 1394, the receiving unit 211 corresponds to a link layer and the FIFO memory 212 through the comparator 215 correspond to an application layer, in view of a protocol architecture.

A divider 220 receives the frame pulse (frame_dif) output from the digital interface 210 as a reset signal, and generates the frame reset pulse (FRP), the horizontal synchronizing signal (H_sync), and the field signal (field), according to a system clock (18MHz and 13.5MHz) generated by the clock generator 230. The frame reset pulse (frp) is output to the channel encoder 240 and the source decoder 250. The horizontal synchronizing signal (H_sync) and the field signal (field), are output to the video encoder 260.

The frame reset pulse (frp) is generated in the divider 220 based on the frame pulse (frame-dif) output from the digital interface 210, delayed for a predetermined time. This time is less than the margin time of an inner bus or corresponds to the time for filling data into the FIFO memory 212. At this time, the inner system clock of the channel encoder 240, and that of the source decoder 250, free-oscillate and are not synchronized, and a colour burst signal generated by the video encoder 260 is also not frame-locked and free-oscillates. At this time, the horizontal synchronizing signal (H_sync) and the field signal (field), made using the system clock generated by the clock generator 230, are generated by the sequence reset by the frame reset pulse. Therefore, the period of the horizontal synchronizing signal (H_sync) is not uniform, however, the number of the horizontal synchronizing signals is constant in frame units.

Meanwhile, data in the FIFO memory 212 is read and transferred to the channel encoder 240 and the source decoder 250 through the AV_bus. The data is read according to a control signal (CON), generated in the source decoder 250 in a predetermined timing immediately after the frame reset pulse (frp) is generated in the divider 220.

The channel encoder 240 is reset by the frame reset pulse (frp) output from the divider 220 during the digital interface mode and receives data read from the FIFO memory 212 through the AV_bus. During a normal mode, the channel encoder 240 channel-encodes data, which is source-encoded by a source encoder (not shown), and records it on a recording medium such as a tape. The channel encoder 240 includes an error correction encoder (not shown), for error correction encoding the source-encoded data, and a modulator (not shown), for modulating error-correction encoded data and recording it on a recording medium.

The source decoder 250 is reset by the frame reset pulse (frp) output from the divider 220 during the digital interface mode and receives data read from the FIFO memory 212 through the AV_bus. During the normal mode, the source decoder 250 source-decodes channel-decoded data output from a channel decoder (not shown), and outputs the data to the video encoder 260. The source decoder 250 includes a data decompressor (not shown), for decompressing error correction decoded data, and a deshuffler (not shown), for deshuffling the decompressed data.

The video encoder 260 receives the horizontal synchronizing signal (H_sync) and the field signal (field), output from the divider 220 during a normal mode, according to a digital interface/normal mode signal (DIF/NORMAL). The video encoder 260 resets the colour burst signal at a period of a predetermined number of fields, and encodes source decoded data, output from the source decoder 250, as an appropriate signal for display. The video encoder 260 free-oscillates a colour burst signal with respect to the colour signal during the digital interface mode.

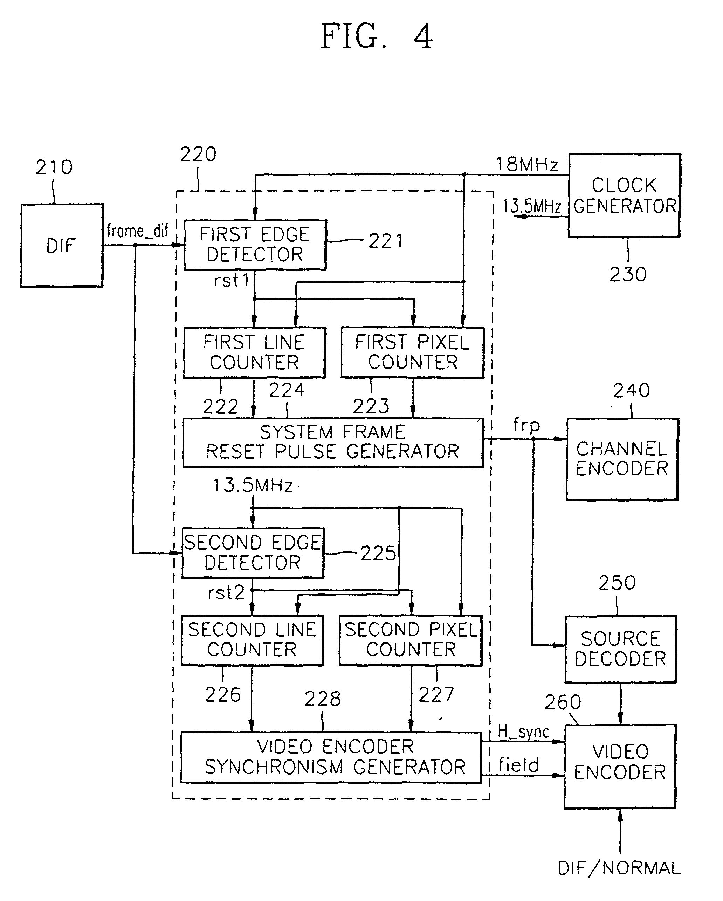

Figure 4 is a detailed block diagram of the divider shown in Figure 3. The divider 220 includes first and second edge detectors 221 and 225, first and second line counters 222 and 226, first and second pixel counters 223 and 227, a system frame reset pulse generator 224, and a video encoder synchronism (sync) generator 228. The first edge detector 221 reset by the frame pulse (frame_dif) output from the digital interface 210, performs counting according to the 18MHz clock signal generated in the clock generator 230, detects the edge of the frame pulse (frame_dif), and outputs a first reset signal (rst1). The first line counter 222 and the first pixel counter 223 reset by the first reset signal (rst1) output from the first edge detector 221 count lines and pixels, respectively, according to the 18MHz clock output from the clock signal generator 230. The system frame reset pulse generator 224 generates the frame reset pulse (frp), according to the outputs of the first line counter 222 and the first pixel counter 223, and outputs the frame reset pulse (frp) to the channel encoder 240 and the source decoder 250.

The second edge detector 225 reset by the frame pulse (frame_dif) output from the digital interface 210, performs counting according to the 13.5MHz clock signal generated in the clock generator 230, detects the edge of the frame pulse (frame_dif) and outputs a second reset signal (rst2). The second line counter 226 and second pixel counter 227 reset by the second reset signal (rst2), count lines and pixels, respectively, according to the 13.5MHz clock signal generated by the clock generator 230. The video encoder sync generator 228 outputs the horizontal synchronizing signal (H_sync) and the field signal (field) to the video encoder 260, according to the outputs of the second line counter 226 and the second pixel counter 227.

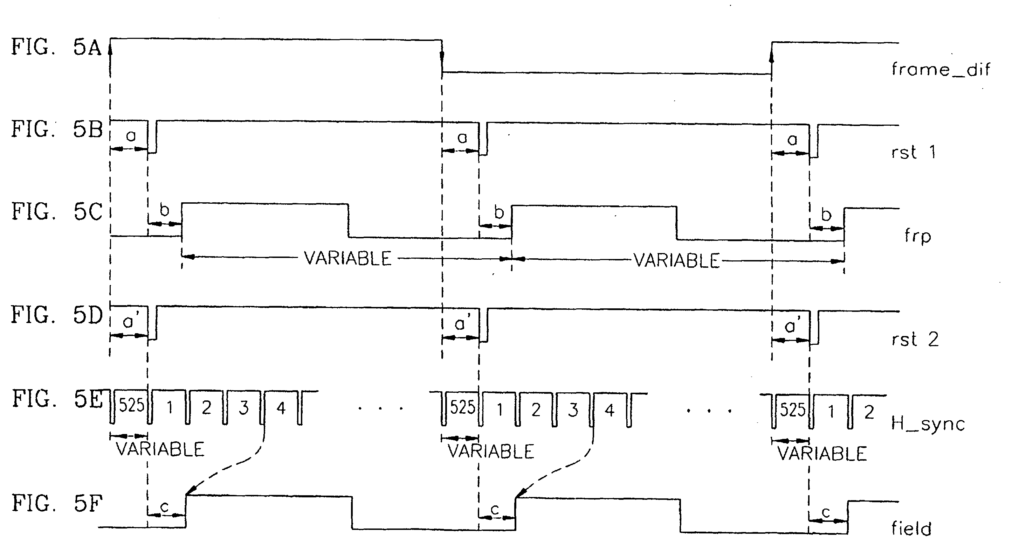

When the frame pulse (frame_dif) shown in Figure 5A is output from the digital interface 210, the first edge detector 221 detects the edge of the frame pulse (frame_dif) according to the 18MHz clock signal generated by the clock generator 230, counts the 18MHz clock signal as much as the time (here, marked "a") required by the digital interface 210, generates a first reset signal (rst1) shown in Figure 5B, and resets the first line counter 222 and the first pixel counter 223 to a pre-designated value. The system frame reset pulse generator 224 generates the frame reset pulse (frp) shown in Figure 5C after delaying for a predetermined time after the first line counter 222 and the first pixel counter 223 are reset by the first reset signal (rst1). The period of the frame pulse can vary, since the frame reset pulse (frp) of the present invention is generated in response to the edge of the frame pulse (frame_dif).

The second edge detector 225 detects the edge of the frame pulse (frame_dif) shown in Figure 5A, according to the 13.5MHz clock signal generated by the clock generator 230, counts the 13.5MHz clock signal as much as time (here, marked "a'") required by the digital interface 210, generates the second reset signal (rst2) shown in Figure 5D, and resets the second line counter 226 and the second pixel counter 227 to a pre-designated value. The video encoder sync generator 228 generates the horizontal synchronizing signal (H_sync) shown in Figure 5E and the field signal (field) shown in Figure 5F, according to the count values of the second line counter 226 and the second pixel counter 227. The horizontal period of the last line (the 525th line in the case of NTSC) as shown in Figure 5E can vary. The field signal (field) shown in Figure 5F is generated in synchronization with a fourth horizontal synchronizing signal, and operates as a field discriminating signal or a field synchronizing signal.

The counters 222, 223, 226, and 227 are reset in the pixel count value in the middle of the last line (the 525th line in the case of NTSC) in which data is not processed in the system. When the counters are reset in this way, the video signal processing of one frame is identical to that of a conventional system, and the length of one frame can be longer or shorter than that of the conventional system. The length of one frame varying can be solved by free-oscillating the colour burst signal in the video encoder 260.

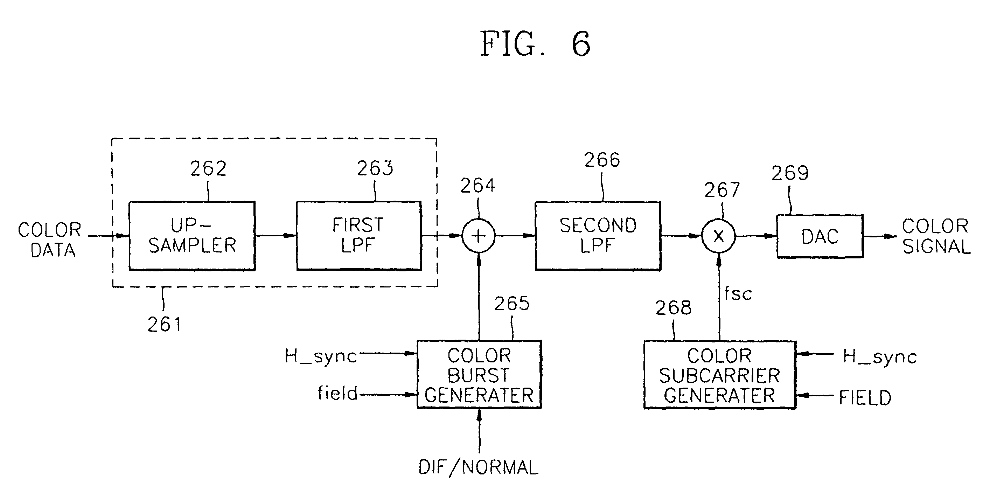

Figure 6 is a detailed circuit diagram of a colour signal processor of the video encoder 260 shown in Figure 3. An interpolator 261, including an up-sampler 262 and a first low pass filter 263, separates colour data from the data output from the source decoder 250 shown in Figure 3, interpolates the colour data, and outputs the interpolated colour data. At this time, the colour data input to the interpolator 261 is the colour data output from the source decoder 250. An adder 264 adds the interpolated colour data to the colour burst signal generated by the colour burst generator 265, and outputs the result to a mixer 267 via a second low pass filter. The second low pass filter 266 is used for restricting the band of the colour signal before it is modulated by the output signal of a colour subcarrier (f_{sc}) generator 268. The mixer 267, which includes a multiplier, mixes the colour data, including the colour burst signal output from the second low pass filter 266, with a colour subcarrier, and outputs the mixed result to a digital/analog converter (DAC) 269. The colour subcarrier (f_{sc}) is generated by the colour subcarrier generator 268, according to the horizontal synchronizing signal (H_sync) and the field signal (field) output from the divider 220 of Figure 3. The DAC 269 outputs an analog colour signal.

Here, the colour burst generator 265 and the colour subcarrier generator 268, which can be constructed of a memory such as an ROM, reset the colour burst signal in order to maintain a colour frame sequence, in a normal mode. The colour burst signal is reset on the basis of horizontal synchronizing signal (H_sync) and the field signal (field) input to the colour burst generator 265, every four fields in the case of the NTSC system and every eight fields in the case of the PAL system. The colour burst generator 265 resets the colour burst signal in a normal mode, according to the digital interface/normal mode signal (DIF/NORMAL). Therefore, the variety of the period of frame reset pulse is solved by performing colour encoding without reset maintaining the varying frame length. Thus, the frame synchronization of the four or eight field sequence is not formed, but the picture can still be displayed.

In the frame synchronizing device of embodiments of the present invention, it is possible to save designing costs and to widen the precision range of the external signal, which is required by equipment operated as a slave, since a high precision voltage controlled oscillator is not necessary.

## Claims

1. A frame synchronizing device for synchronizing systems connected to a digital interface, comprising:
a digital interface (210), for extracting frame time information included in a signal received from an external source;
a first edge detector (221) reset by said frame time information output from said digital interface (210), for detecting the edge of said frame time information according to a first system clock signal, and for outputting a first reset signal;
a second edge detector (225) reset by said frame time information output from said digital interface, for detecting the edge of said frame time information according to a second system clock signal, and for outputting a second reset signal; and
a generator for generating a frame reset signal based on said first system clock signal and said first reset signal and for generating synchronizing signals required by said systems, based on said second system clock signals and said second reset signal.

2. A frame synchronizing device as claimed in claim 1, further comprising a signal processor, for free-oscillating a colour burst signal during a digital interface mode, when said received signal is source-decoded and then encoded into a display signal, and for resetting said colour burst signal according to said synchronizing signals during a normal mode.

3. A frame synchronizing device as claimed in claim 1, wherein said digital interface (210) is IEEE 1394.

4. A frame synchronizing device as claimed in claim 3, wherein said digital interface (210) comprises:
a receiving unit (211) for receiving said received signal from the external source in the form of a transport packet, removing an extra header of said transport packet and outputting data having no extra header;
a buffer (212) for temporarily storing said data having no extra header;
a time stamp extractor (214) for extracting a time stamp included in said transport packet;
a cycle timer (213) for counting according to a reference clock included in said transport packet, outputting a count value, and renewing said count value in every cycle start packet; and
a comparator (215) for comparing said frame time information included in said time stamp with said count value, and generating a frame pulse.

5. A frame synchronizing device as claimed in claim 4, wherein said generator generates said frame reset signal delayed by a predetermined time compared to said frame pulse, considering the inner bus margin of said digital interface (210) and time for writing data into said buffer (212).

6. A frame synchronizing device as claimed in claim 4, further comprising a clock generator (230) for generating first and second system clock signals required for said systems.

7. A frame synchronizing device as claimed in claim 6, wherein said generator comprises:
a first line counter (222) and a first pixel counter (223), reset by said first reset signal, for counting lines and pixels, respectively, according to said first system clock signal;
a first generator (224) for generating the frame reset signal according to the outputs of said first line counter (222) and said first pixel counter (223);
a second line counter (226) and a second pixel counter (227), reset by said second reset signal, for counting lines and pixels, respectively, according to said second system clock signal; and
a second generator (228) for generating a horizontal synchronizing signal and a field signal according to the outputs of said second line counter and said second pixel counter.

8. A frame synchronizing device as claimed in claim 7, further comprising:
a channel encoder (240), reset by said frame reset signal generated by said first generator (224), for channel-encoding data read from said buffer (212) and transferring the read data to a recording medium;
a source decoder (250), reset by said frame reset signal, for source-decoding data read from said buffer (211); and
a video encoder (260), reset by said horizontal synchronizing signal and said field signal output from said second generator (228), for encoding data output from said source decoder (250) into a display signal.

9. A frame synchronizing device as claimed in claim 8, wherein the colour burst signal is free-oscillated during a digital interface mode, and the colour burst signal is reset at a period of a predetermined number of fields according to said horizontal synchronizing signal and said field signal output from said second generator during a normal mode.

10. A frame synchronizing device as claimed in claim 9, wherein the data stored in said buffer (212) is transferred to said source decoder (250) and said channel encoder (240), after said system is reset by said frame reset signal, during said digital interface mode.

11. A frame synchronizing device for synchronizing a master system with a slave system, comprising:
an extractor (210) for extracting reference time information from data received from said master system;
a first edge detector (221) reset by said frame time information output from said digital interface, for detecting the edge of said frame time information according to a first system clock signal, and for outputting a first reset signal;
a second edge detector (225) reset by said frame time information output from said digital interface, for detecting the edge of said frame time information according to a second system clock signal, and for outputting a second reset signal; and
a generator for generating a frame reset signal based on said first system clock signal and said first reset signal and for generating synchronizing signals required by said slave system, based on said second system clock signals and said second reset signal.

12. A frame synchronizing method for synchronizing systems connected to a digital interface, comprising the steps of:
(a) extracting frame time information included in a signal received from an external source, during a digital interface mode;
(b) detecting the edge of said frame time information according to a first system clock signal, and outputting a first reset signal;
(c) detecting the edge of said frame time information according to a second system clock signal, and outputting a second reset signal; and
(d) generating a frame reset signal based on said first system clock signal and said first reset signal and generating synchronizing signals required by said systems, based on said second system clock signals and said second reset signal,
wherein said step (a) further comprises the step of (a1) receiving data in the form of a transport packet from the external source, removing an extra header from the transport packet, and outputting data having no extra header.

13. A frame synchronizing method as claimed in claim 12, wherein said step (a) further comprises the steps of:
(a2) storing said data having no extra header;
(a3) extracting a time stamp included in said transport packet;
(a4) performing counting according to a reference clock included in said transport packet, outputting a count value, and renewing said count value at every cycle start packet; and
(a5) comparing said frame time information included in said time stamp with said count value and generating a frame pulse.

14. A frame synchronizing method as claimed in claim 12, wherein said frame reset signal is generated after delaying said frame pulse by predetermined time said frame pulse considering the inner bus margin of said digital interface.

15. A frame synchronizing method as claimed in claim 14, wherein said step (d) comprises the sub-steps of:
(d1) counting lines and pixels according to said first system clock, resetting according to said first reset signal, and outputting first count values;
(d2) generating a frame reset signal on the basis of said first count values;
(d3) counting lines and pixels according to said second system clock, resetting according to said second reset signal, and outputting second count values; and
(d4) generating a horizontal synchronizing signal and a field signal on the basis of said second count values.

16. A frame synchronizing method as claimed in claim 15, further comprising the steps of:
(e) channel-encoding the data stored in said step (a2), transferring it to a recording medium, and resetting according to said frame reset signal;
(f) source-decoding data stored in said step (a2), and outputting the source-decoded data, and resetting according to said frame reset signal; and
(g) encoding said source-decoded data into a display signal and resetting said source-decoded data by said horizontal synchronizing signal and said field signal.

17. A frame synchronizing method as claimed in claim 16, wherein a colour burst signal is free-oscillated during a digital interface mode, and said colour burst signal is reset at a period of a predetermined number of fields according to said horizontal synchronizing signal and said field signal during a normal mode in said step (g).

18. A frame synchronizing method as claimed in claim 16, further comprising a step of transferring the data stored in said step (a2) to said steps (e) and (f) after said system is reset by said frame reset signal.

19. A frame synchronizing method for synchronizing a master system with a slave system, comprising the steps of:
(a) extracting reference time information from data received from said master system;
(b) detecting the edge of said frame time information according to a first system clock signal, and outputting a first reset signal;
(c) detecting the edge of said frame tine information according to a second system clock signal, and outputting a second reset signal; and
(d) generating a frame reset signal based on said first system clock signal and said first reset signal and generating synchronizing signals required by said slave system, based on said second system clock signals and said second reset signal,
wherein said step (a) further comprises the step of (a1) receiving data in the form of a transport packet from an external source, removing an extra header from the transport packet, and outputting data having no extra header.

## Patentansprüche

1. Vollbild-Synchronisierungsvorrichtung zum Synchronisieren von Systemen, die mit einer Digitalschnittstelle verbunden sind, wobei sie umfasst:
eine Digitalschnittstelle (210), die eine Vollbildzeit-Information extrahiert, die in einem Signal enthalten ist, das von einer externen Quelle empfangen wird;
einen ersten Flankendetektor (212), der durch die Vollbildzeit-Information zurückgesetzt wird, die von der Digitalschnittstelle (210) ausgegeben wird, und der die Flanke der Vollbildzeit-Information entsprechend einem ersten Systemtakt-Signal erfasst und der ein erstes Rücksetz-Signal ausgibt;
einen zweiten Flankendetektor (225), der durch die Vollbildzeit-Information zurückgesetzt wird, die von der Digitalschnittstelle ausgegeben wird, und der die Flanke der Vollbildzeit-Information entsprechend einem zweiten Systemtakt-Signal erfasst und der ein zweites Rücksetz-Signal ausgibt; und
einen Generator, der ein Vollbild-Rücksetz-Signal auf der Basis des ersten Systemtakt-Signals und des ersten Rücksetz-Signals erzeugt und der Synchronisierungs-Signale, die von den Systemen benötigt werden, auf der Basis der zweiten Systemtakt-Signale und des zweiten Rücksetz-Signals erzeugt.

2. Vollbild-Synchronisierungsvorrichtung nach Anspruch 1, die des Weiteren einen Signalprozessor umfasst, der ein Farbsynchron-Signal während eines Digitalschnittstellen-Modus frei schwingen lässt, wenn das empfangene Signal quellendekodiert und dann zu einem Anzeige-Signal kodiert wird, und der das Farbsynchron-Signal während eines Normal-Modus entsprechend den Synchronisierungs-Signalen zurücksetzt.

3. Vollbild-Synchronisierungsvorrichtung nach Anspruch 1, wobei es sich bei der Digitalschnittstelle (210) um IEEE 1394 handelt.

4. Vollbild-Synchronisierungsvorrichtung nach Anspruch 3, wobei die Digitalschnittstelle (210) umfasst:
eine Empfangseinheit (211), die das empfangene Signal von der externen Quelle in Form eines Transport-Paketes empfängt, einen Zusatz-Kopf des Transport-Paketes entfernt und Daten ohne Zusatz-Kopf ausgibt;
einen Puffer (212), der vorübergehend die Daten ohne Zusatz-Kopf speichert;
eine Zeitprotokollierungs-Extrahierungsvorrichtung (214), die eine Zeit-Protokollierung extrahiert, die in dem Transport-Paket enthalten ist;
ein Zyklus-Zeitgeber (213), der entsprechend einem Bezugstakt zählt, der in dem Transport-Paket enthalten ist, einen Zählwert ausgibt und den Zählwert in jedem Zyklusstart-Paket erneuert; und
einen Komparator (215), der die Vollbildzeit-Information, die in der Zeitprotokollierung enthalten ist, mit dem Zählwert vergleicht und einen Vollbild-Impuls erzeugt.

5. Vollbild-Synchronisierungsvorrichtung nach Anspruch 4, wobei der Generator das Vollblld-Rücksetz-Signal verglichen mit dem Vollbild-Impuls um eine vorgegebene Zeit verzögert und dabei die Toleranz des inneren Busses der Digitalschnittstelle (210) sowie die Zeit zum Schreiben von Daten in den Puffer (212) berücksichtigt.

6. Vollbild-Synchronisierungsvorrichtung nach Anspruch 4, die des Weiteren einen Takt-Generator (230) umfasst, der ein erstes und ein zweites Systemtakt-Signal erzeugt, die für die Systeme benötigt werden.

7. Vollbild-Synchronisierungsvorrichtung nach Anspruch 6, wobei der Generator umfasst:
einen ersten Zeilenzähler (222) und einen ersten Bildpunktzähler (223), die durch das erste Rücksetz-Signal zurückgesetzt werden und die Zeilen bzw. Bildpunkte entsprechend dem ersten Systemtakt-Signal zählen;
einen ersten Generator (224), der das Voiibiid-Rücksetz-Signal entsprechend den Ausgängen des ersten Zeilenzählers (222) und des ersten Bildpunktzählers (223) erzeugt;
einen zweiten Zeilenzähler (226) und einen zweiten Bildpunktzähler (227), die durch das zweite Rücksetz-Signal zurückgesetzt werden und die Zeilen bzw. Bildpunkte entsprechend dem zweiten Systemtakt-Signal zählen; und
einen zweiten Generator (228), der ein Horizontalsynchronisierungs-Signal und ein Teilbild-Signal entsprechend den Ausgängen des zweiten Zeilenzählers und des zweiten Bildpunktzählers erzeugt.

8. Vollbild-Synchronisierungsvorrichtung nach Anspruch 7, die des Weiteren umfasst:
einen Kanal-Kodierer (240), der von dem Vollbild-Rücksetz-Signal zurückgesetzt wird, das von dem ersten Generator (224) erzeugt wird, und der Daten, die aus dem Puffer (212) gelesen werden, kanalkodiert und die gelesenen Daten zu einem Aufzeichnungsmedium überträgt;
einen Quellen-Dekodierer (250), der von dem Vollbild-Rücksetz-Slgnal zurückgesetzt wird und der Daten, die aus dem Puffer (211) gelesen werden, quellenkodiert; und
eine Video-Kodierer (260), der durch das Horizontalsynchronisierungs-Signal und das Teilbild-Signal zurückgesetzt wird, die von dem zweiten Generator (228) ausgegeben werden, und der Daten, die von dem Quellen-Dekodierer (250) ausgegeben werden, zu einem Anzeige-Signal kodiert.

9. Vollbild-Synchronisierungsvorrichtung nach Anspruch 8, wobei das Farbsynchronisierungs-Signal während eines Digitalschnittstellen-Modus frei schwingt und das Farbsynchronisierungs-Signal während eines Normal-Modus in einer Periode einer vorgegebenen Anzahl von Teilbildern entsprechend dem Horizontalsynchronisierungs-Signal und dem Teilbild-Signal, die von dem zweiten Generator erzeugt werden, zurückgesetzt wird.

10. Vollbild-Synchronisierungsvorrichtung nach Anspruch 9, wobei die Daten, die in dem Puffer (212) gespeichert sind, während des Digitalschnittstellen-Modus zu dem Quellen-Dekodierer (250) und dem Kanal-Kodierer (240) übertragen werden, nachdem das System von dem Vollbild-Rücksetz-Signal zurückgesetzt worden ist.

11. Vollbild-Synchronisierungsvorrichtung zum Synchronisieren eines Haupt-Systems mit einem Unter-System, die umfasst:
eine Extrahierungsvorrichtung (210), die eine Bezugszeit-Information aus Daten extrahiert, die von dem Hauptsystem empfangen werden;
einen ersten Flankendetektor (221), der durch die Vollbildzeit-Information zurückgesetzt wird, die von der Digitalschnittstelle ausgegeben wird, und der die Flanke der Vollbildzeit-Information entsprechend einem ersten Systemtakt-Signal erfasst und der ein erstes Rücksetz-Signal ausgibt;
einen zweiten Flankendetektor (225), der durch die Vollbildzeit-Information zurückgesetzt wird, die von der Digitalschnittstelle ausgegeben wird, und der die Flanke der Vollbildzeit-Information entsprechend einem zweiten Systemtakt-Signal zurücksetzt und der ein zweites Rücksetz-Signal ausgibt; und
einen Generator, der ein Vollbild-Rücksetz-Signal auf der Basis des ersten Systemtakt-Signals und des ersten Rücksetz-Signals erzeugt und der Synchronisierungs-Signale, die von dem Untersystem benötigt werden, auf der Basis der zweiten Systemtakt-Signale und des zweiten Rücksetz-Signals erzeugt.

12. Vollbild-Synchronisierungsverfahren zum Synchronisieren von Systemen, die mit einer Digitalschnittstelle verbunden sind, das die folgenden Schritte umfasst:
(a) Extrahieren einer Vollbildzeit-lnformation, die in einem Signal enthalten ist, das von einer externen Quelle empfangen wird, während eines Digitalschnittstellen-Modus;
(b) Erfassen der Flanke der Vollbildzeit-Information entsprechend einem ersten Systemtakt-Signal und Ausgeben eines ersten Rücksetz-Signals;
(c) Erfassen der Flanke der Vollbildzeit-Information entsprechend einem zweiten Systemtakt-Signal und Ausgeben eines zweiten Rücksetz-Signals; und
(d) Erzeugen eines Vollbild-Rücksetz-Signals auf der Basis des ersten Systemtakt-Signals und des ersten Rücksetz-Signals und Erzeugen von Synchronisierungs-Signalen, die von den Systemen benötigt werden, auf der Basis der zweiten Systemtakt-Signale und des zweiten Rücksetz-Signals,
wobei der Schritt (a) des Weiteren den Schritt (a1) des Empfangens von Daten in Form eines Transport-Paketes von der externen Quelle, des Entfemens eines Zusatz-Kopfes von dem Transport-Paket und des Ausgebens von Daten ohne Zusatz-Kopf umfasst.

13. Vollbild-Synchronisierungsverfahren nach Anspruch 12, wobei der Schritt (a) des Weiteren die folgenden Schritte umfasst:
(a2) Speichern der Daten ohne Zusatz-Kopf;
(a3) Extrahieren einer Zeitprotokollierung, die in dem Transport-Paket enthalten ist;
(a4) Ausführen von Zählen entsprechend einem Bezugstakt, der in dem Transportpaket enthalten ist, Ausgeben eines Zählwertes und Erneuern des Zählwertes bei jedem Zyklusstart-Paket; und
(a5) Vergleichen der Vollbildzeit-Information, die in der Zeitprotokollierung enthalten ist, mit dem Zählwert und Erzeugen eines Vollbild-Impulses.

14. Vollbild-Synchronisierungsverfahren nach Anspruch 12, wobei das Vollbild-Rücksetz-Signal erzeugt wird, nachdem der Vollbild-Impuls um eine vorgegebene Zeit verzögert worden ist, wobei der Vollbild-Impuls die Toleranz des inneren Busses der Digitalschnittstelle berücksichtigt.

15. Vollbild-Synchronisierungsverfahren nach Anspruch 14, wobei der Schritt (d) die folgenden Teilschritte umfasst:
(d1) Zählen von Zeilen und Bildpunkten entsprechend einem ersten Systemtakt, Zurücksetzen entsprechend dem ersten Rücksetz-Signal und Ausgeben erster Zählwerte;
(d2) Erzeugen eines Vollbild-Rücksetz-Signals auf der Basis der ersten Zählwerte;
(d3) Zählen von Zeilen und Bildpunkten entsprechend dem zweiten Systemtakt, Zurücksetzen entsprechend dem zweiten Rücksetz-Signal und Ausgeben zweiter Zählwerte; und
(d4) Erzeugen eines Horizontalsynchronisierungs-Signals und eines Teilbild-Signals auf der Basis der zweiten Zählwerte.

16. Vollbild-Synchronisierungsverfahren nach Anspruch 15, das des Weiteren die folgenden Schritte umfasst:
(e) Kanalkodieren der Daten, die in dem Schritt (a2) gespeichert werden, Übertragen derselben zu einem Aufzeichnungsmedium und Zurücksetzen entsprechend dem Vollbild-Rücksetz-Signal;
(f) Quellendekodieren von Daten, die in dem Schritt (a2) gespeichert werden und Ausgeben der quellendekodierten Daten und Zurücksetzen entsprechend dem Vollbild-Rücksetz-Signal; und
(g) Kodieren der quellendekodierten Daten zu einem Anzeigesignal und Zurücksetzen der quellendekodierten Daten durch das Horizontalsynchronisierungs-Signal und das Teilbild-Signal.

17. Vollbild-Synchronisierungsverfahren nach Anspruch 16, wobei ein Farbsynchronisierungs-Signal während eines Digitalschnittstellen-Modus frei schwingt und das Farbsynchronisierungs-Signal während eines Normal-Modus in dem Schritt (g) in einer Periode einer vorgegebenen Anzahl von Teilbildern entsprechend dem Horizontalsynchronisierungs-Signal und dem Teilbild-Signal zurückgesetzt wird.

18. Vollbild-Synchronisierungsverfahren nach Anspruch 16, das des Weiteren einen Schritt des Übertragens der Daten, die in dem Schritt (a2) gespeichert werden, zu den Schritten (e) und (f) nach dem Zurücksetzen des Systems durch das Vollbild-Rücksetz-Signal umfasst.

19. Vollbild-Synchronisierungsverfahren zum Synchronisieren eines Hauptsystems mit einem Untersystem, das die folgenden Schritte umfasst:
(a) Extrahieren einer Bezugszeit-Information aus Daten, die von dem Hauptsystem empfangen werden und Ausgeben eines ersten Rücksetz-Signals:
(b) Erfassen der Flanke der Vollbildzeit-Information entsprechend einem ersten Systemtakt-Signal und Ausgeben eines ersten Rücksetz-Signals;
(c) Erfassen der Flanke der Vollbildzeit-Information entsprechend einem zweiten Systemtakt-Signal und Ausgeben eines zweiten Rücksetz-Signals; und
(d) Erzeugen eines Vollbild-Rücksetz-Signals auf der Basis des ersten Systemtakt-Signals und des ersten Rücksetz-Signals und Erzeugen von Synchronisierungs-Signalen, die von dem Untersystem benötigt werden, auf der Basis der zweiten Systemtakt-Signale und des zweiten Rücksetz-Signals,
wobei der Schritt (a) des Weiteren den Schritt (a1) des Empfangens von Daten in Form eines Transport-Paketes von einer externen Quelle, des Entfernens eines Zusatz-Kopfes von dem Transport-Paket und des Ausgebens von Daten ohne Zusatz-Kopf umfasst.

## Revendications

1. Dispositif de synchronisation de trame pour synchroniser des systèmes connectés à une interface numérique, comprenant :
une interface numérique (210) servant à extraire des informations de durée de trame incluses dans un signal reçu d'une source extérieure ;
un premier détecteur (221) de limites réinitialisé par lesdites informations de durée de trame délivrées par ladite interface numérique (210), pour détecter les limites desdites informations de durée de trame en fonction d'un signal d'horloge d'un premier système, et pour délivrer un premier signal de réinitialisation ;
un second détecteur (225) de limites réinitialisé par lesdites informations de durée de trame délivrées par ladite interface numérique, pour détecter les limites desdites informations de durée de trame en fonction d'un signal d'horloge d'un second système, et pour délivrer un second signal de réinitialisation ; et
un générateur pour générer un signal de réinitialisation de trame sur la base dudit signal d'horloge du premier système et dudit premier signal de réinitialisation et pour générer des signaux de synchronisation nécessités par lesdits systèmes, sur la base desdits signaux d'horloge du second système et dudit second signal de réinitialisation.

2. Dispositif de synchronisation de trame selon la revendication 1, comprenant en outre un processeur de signal servant à mettre en oscillation libre un signal de salve de chrominance pendant un mode interface numérique durant lequel ledit signal reçu est soumis à un décodage de source puis est codé sous la forme d'un signal d'affichage, et servant à réinitialiser ledit signal de salve de chrominance en fonction desdits signaux de synchronisation pendant un mode normal.

3. Dispositif de synchronisation de trame selon la revendication 1, dans lequel ladite interface numérique (210) est constituée par un bus IEEE 1394.

4. Dispositif de synchronisation de trame selon la revendication 3, dans lequel ladite interface numérique (210) comporte :
une unité de réception (211) servant à recevoir ledit signal reçu de la source extérieure sous la forme d'un paquet de transport, supprimer un en-tête supplémentaire dudit paquet de transport et délivrer des données sans en-tête supplémentaire ;
une mémoire tampon (212) servant à stocker temporairement lesdites données sans en-tête supplémentaire ;
un extracteur (214) d'indicateur de durée servant à extraire un indicateur de durée inclus dans ledit paquet de transport ;
un compteur (213) de durée de cycle servant à compter en fonction d'un signal d'horloge de référence inclus dans ledit paquet de transport, à délivrer une valeur de comptage et à renouveler ladite valeur de comptage dans chaque paquet de début de cycle ; et
un comparateur (215) servant à comparer lesdites informations de durée de trame incluses dans ledit indicateur de durée avec ladite valeur de comptage, et à générer une impulsion de trame.

5. Dispositif de synchronisation de trame selon la revendication 4, dans lequel ledit générateur génère ledit signal de réinitialisation de trame retardé d'un laps de temps prédéterminé en comparaison de ladite impulsion de trame, compte tenu de la marge du bus interne de ladite interface numérique (210) et du temps pour l'inscription de données dans ladite mémoire tampon (212).

6. Dispositif de synchronisation de trame selon la revendication 4, comprenant en outre un générateur (230) de signaux d'horloge servant à générer des signaux d'horloge pour le premier et le second systèmes, nécessaires pour lesdits systèmes.

7. Dispositif de synchronisation de trame selon la revendication 6, dans lequel ledit générateur comporte :
un premier compteur (222) de lignes et un premier compteur (223) de pixels, réinitialisés par ledit premier signal de réinitialisation, servant à compter respectivement des lignes et des pixels en fonction dudit signal d'horloge du premier système ;
un premier générateur (224) servant à générer le signal de réinitialisation de trame en fonction des signaux de sortie dudit premier compteur (222) de lignes et dudit premier compteur (223) de pixels ;
un second compteur (226) de ligne et un second compteur (227) de pixels, réinitialisés par ledit second signal de réinitialisation, servant à compter respectivement des lignes et des pixels, en fonction dudit signal d'horloge du second système ; et
un second générateur (228) servant à générer un signal de synchronisation horizontale et un signal de synchronisation verticale en fonction des signaux délivrés par ledit second compteur de lignes et ledit second compteur de pixels.

8. Dispositif de synchronisation de trame selon la revendication 7, comprenant en outre :
un codeur (240) de canal, réinitialisé par ledit signal de réinitialisation de trame généré par ledit premier générateur (224), servant à réaliser un codage de canal pour les données extraites de ladite mémoire tampon (212) et à transférer les données extraites sur un support d'enregistrement ;
un décodeur (250) de source, réinitialisé par ledit signal de réinitialisation de trame, pour réaliser un décodage de source des données extraites de ladite mémoire tampon (212) ; et
un codeur vidéo (260), réinitialisé par ledit signal de synchronisation horizontale et ledit signal de synchronisation verticale délivrés par ledit second générateur (228), servant à coder sous la forme d'un signal d'affichage les données délivrées par ledit décodeur (250) de source.

9. Dispositif de synchronisation de trame selon la revendication 8, dans lequel le signal de salve de chrominance est mis en oscillation libre pendant un mode interface numérique, et le signal de salve de chrominance est réinitialisé suivant une périodicité d'un nombre prédéterminé de lignes de balayage de trame en fonction dudit signal de synchronisation horizontale et dudit signal de synchronisation verticale délivrés par ledit second générateur pendant un mode normal.

10. Dispositif de synchronisation de trame selon la revendication 9, dans lequel les données stockées dans ladite mémoire tampon (212) sont transférées dans ledit décodeur (250) de source et ledit codeur (240) de canal, après la réinitialisation dudit système par ledit signal de réinitialisation de trame, pendant ledit mode interface numérique.

11. Dispositif de synchronisation de trame servant à synchroniser un système maître avec un système esclave, comprenant :
un extracteur (210) servant à extraire des informations de temps de référence des données reçues dudit système maître ;
un premier détecteur (225) de limites réinitialisé par lesdites informations de durée de trame délivrées par ladite interface numérique, servant à détecter les limites desdites informations de durée de trame en fonction d'un signal d'horloge du premier système, et à délivrer un premier signal de réinitialisation ;
une second détecteur (225) de limites réinitialisé par lesdites informations de durée de trame délivrées par ladite interface numérique, servant à détecter les limites desdites informations de durée de trame en fonction d'un signal d'horloge du second système, et à délivrer un second signal de réinitialisation ; et
un générateur servant à générer un signal de réinitialisation de trame sur la base dudit signal d'horloge du premier système et dudit premier signal de réinitialisation et à générer des signaux de synchronisation nécessités par ledit système esclave, sur la base desdits signaux d'horloge du second système et dudit second signal de réinitialisation.

12. Procédé de synchronisation de trame pour synchroniser des systèmes connectés à une interface numérique, comprenant les étapes consistant à :
(a) extraire des informations de durée de trame incluses dans un signal reçu d'une source extérieure, pendant un mode interface numérique ;
(b) détecter les limites desdites informations de durée de trame en fonction d'un signal d'horloge d'un premier système, et délivrer un premier signal de réinitialisation ;
(c) détecter les limites desdites informations de durée de trame en fonction d'un signal d'horloge du second système et délivrer un second signal de réinitialisation ; et
(d) générer un signal de réinitialisation de trame sur la base dudit signal d'horloge du premier système et dudit premier signal de réinitialisation et générer des signaux de synchronisation nécessités par lesdits systèmes, sur la base desdits signaux d'horloge du second système et dudit second signal de réinitialisation,
ladite étape (a) comportant en outre l'étape (a1) consistant à recevoir de la source extérieure des données sous la forme d'un paquet de transport, supprimer un en-tête supplémentaire du paquet de transport et délivrer des données sans en-tête supplémentaire.

13. Procédé de synchronisation de trame selon la revendication 12, dans lequel ladite étape (a) comporte en outre les étapes consistant à :
(a2) stocker lesdites données sans en-tête supplémentaire ;
(a3) extraire un indicateur de durée inclus dans ledit paquet de transport ;
(a4) effectuer un comptage en fonction d'un signal d'horloge de référence inclus dans ledit paquet de transport, délivrer une valeur de comptage et renouveler ladite valeur de comptage à chaque paquet de début de cycle ; et
(a5) comparer lesdites informations de durée de trame incluses dans ledit indicateur de durée avec ladite valeur de comptage et générer une impulsion de trame.

14. Procédé de synchronisation de trame selon la revendication 12, dans lequel ledit signal de réinitialisation de trame est généré après avoir retardé ladite impulsion de trame d'un laps de temps déterminé compte tenu de la marge du bus interne de ladite interface numérique.

15. Procédé de synchronisation de trame selon la revendication 14, dans lequel ladite étape (d) comporte les sous-étapes consistant à :
(d1) compter les lignes et les pixels conformément audit signal d'horloge du premier système, réinitialiser en fonction dudit premier signal de réinitialisation et délivrer des premières valeurs de comptage ;
(d2) générer un signal de réinitialisation de trame sur la base desdites premières valeurs de comptage ;
(d3)compter les lignes et les pixels en fonction dudit signal d'horloge du second système, réinitialiser en fonction dudit second signal de réinitialisation et délivrer des secondes valeurs de comptage ; et
(d4) générer un signal de synchronisation horizontale et un signal de synchronisation verticale sur la base desdites secondes valeurs de comptage.

16. Procédé de synchronisation de trame selon la revendication 15, comprenant en outre les étapes consistant à :
(e) réaliser un codage de canal des données stockées lors de ladite étape (a2), transférer celles-ci sur un support d'enregistrement et réinitialiser en fonction dudit signal de réinitialisation de trame ;
(f) réaliser un décodage de source des données stockées lors de ladite étape (a2) et délivrer les données soumises à un décodage de source, et réinitialiser en fonction dudit signal de réinitialisation de trame ; et
(g) coder sous la forme d'un signal d'affichage lesdites données soumises à un décodage de source et réinitialiser lesdites données soumises à un décodage de source par ledit signal de synchronisation horizontale et ledit signal de synchronisation verticale.

17. Procédé de synchronisation de trame selon la revendication 16, dans lequel un signal de salve de chrominance est mis en oscillation libre pendant un mode interface numérique, et ledit signal de salve de chrominance est réinitialisé suivant une périodicité d'un nombre prédéterminé de lignes verticales en fonction dudit signal de synchronisation horizontale et dudit signal de synchronisation verticale pendant un mode normal lors de ladite étape (g).

18. Procédé de synchronisation de trame selon la revendication 16, comprenant en outre une étape consistant à soumettre les données stockées lors de ladite étape (a2) auxdites étapes (e) et (f) après la réinitialisation dudit système par ledit signal de réinitialisation de trame.

19. Procédé de synchronisation de trame pour synchroniser un système maître avec un système esclave, comprenant les étapes consistant à :
(a) extraire des informations de temps de référence des données reçues dudit système maître ;
(b) détecter les limites desdites informations de durée de trame en fonction d'un signal d'horloge du premier système et délivrer un premier signal de réinitialisation ;
(c) détecter les limites desdites informations de durée de trame en fonction d'un signal d'horloge du second système et délivrer un second signal de réinitialisation ; et
(d) générer un signal de réinitialisation de trame sur la base dudit signal d'horloge du premier système et dudit premier signal de réinitialisation et générer des signaux de synchronisation nécessités par ledit système esclave, sur la base desdits signaux d'horloge du second système et dudit second signal de réinitialisation,
ladite étape (a) comportant en outre l'étape (a1) consistant à recevoir d'une source extérieure des données sous la forme d'un paquet de transport, à supprimer un en-tête supplémentaire du paquet de transport et à délivrer des données sans en-tête supplémentaire.
